**Europäisches Patentamt**

**European Patent Office**

**Office européen des brevets**

(11) Veröffentlichungsnummer: **0 320 867**
**A2**

## (12) EUROPÄISCHE PATENTANMELDUNG

(21) Anmeldenummer: **88120780.7**

(51) Int. Cl.⁴: **A23K 1/00**

(22) Anmeldetag: **13.12.88**

(30) Priorität: **17.12.87 DE 3742857**

(43) Veröffentlichungstag der Anmeldung:
**21.06.89 Patentblatt 89/25**

(84) Benannte Vertragsstaaten:
**AT BE CH DE FR GB IT LI NL**

(71) Anmelder: **Erbslöh Geisenheim GmbH & Co.**
**Erbslöhstrasse 1**
**D-6222 Geisenheim(DE)**

(72) Erfinder: **Dreifuss, Walter, Prof. Dipl.-Ing.**
**Beinstrasse 13**
**D-6222 Geisenheim(DE)**
Erfinder: **Koch, Dietrich, Dr. Dipl.-Chem.**
**Am Schwarzenstein 24**
**D-6222 Geisenheim-Johannisberg(DE)**

(74) Vertreter: **Weber, Dieter, Dr. et al**
**Willrath Weber und Seiffert Postfach 6145**
**Gustav-Freytag-Strasse 25**
**D-6200 Wiesbaden 1(DE)**

(54) **Diätfuttermittel und dessen Verwendung.**

(57) Ein Diätfuttermittel enthält eine Kombination von 10 bis 95 Gew.-% wenigstens eines quellfähigen Tonminerals, 2 bis 12 Gew.-% getrockneter Bierhefe mit einem Feuchtigkeitsgehalt von 4 bis 10 Gew.-%, bezogen auf Bierhefe-Trockensubstanz, 3 bis 14 Gew.-% eines getrockneten und gemahlenen planzlichen Trägers für die Bierhefe und 1 bis 12 Gew.-% Algenmehl sowie gegebenenfalls übliche Zusatz- und Hilfsstoffe.

EP 0 320 867 A2

## Diätfuttermittel und dessen Verwendung

Um in der heutigen spezialisierten Tierhaltung den gestellten hohen Anforderungen an Mast- und Milchleistung zu genügen, bekommen die Tiere im allgemeinen ein Überangebot an energie- und eiweißreichem Futter. Dies führt zu Belastungen des Tierorganismus, insbesondere des Verdauungstraktes. Das Futtereiweiß wird im Dickdarm nur unvollständig verdaut. Der pH-Wert wird in den alkalischen Bereich verschoben, was dazu führt, daß stickstoffhaltige Produkte freigesetzt werden, die auf die Leberfunktion hemmend wirken und bei den Tieren "Streßsyndrome" bewirken.

Infolge der unzureichenden Verdauung enthält die anfallende Gülle erhebliche Mengen an unvollständig abgebauten Eiweißstoffen und ist geruchsintensiv. Sie vergiftet durch gasförmige Zersetzungsprodukte, wie Ammoniak, Schwefelwasserstoff, Mercaptane usw., die Stalluft und schädigt dadurch die Tiergesundheit. Sie zeigt ein schlechtes Fließverhalten in Güllekanälen und -gruben, beeinträchtigt aufgrund ihrer Wurzeltoxizität das Wachstum von Nutzpflanzen bei Verwendung als Düngemittel und fördert die unerwünschte Gülleflora. Sie mindert die Freßlust der Tiere auf so begüllten Weideflächen, verursacht infolge von Nitrifizierung von Eiweißstickstoff eine Nitratanreicherung im Grundwasser und beeinträchtigt durch lang anhaltende Geruchsfahnen den Freizeit- und Erholungswert ländlicher Gegenden.

Um diese Probleme zu beseitigen, ist es bekannt, die Gülle nachträglich zu behandeln, wie mit Belüftungsverfahren, durch Phasentrennung, Elektrolyseverfahren oder Biogasverfahren oder durch Güllezusatzmittel. Diese Methoden sind aber nur ungenügend wirksam und teilweise aufwendig und umständlich. Da sie erst nachträglich angewendet werden, entsteht zunächst die geruchsintensive Gülle, so daß allenfalls eine Geruchsminderung bei der Weiterverwendung als Düngemittel, nicht aber in der Tierhaltung selbst eintritt, so daß die dort auftretenden, oben geschilderten Nachteile durch die nachträgliche Behandlung der Gülle nicht beseitigt werden können.

Die der Erfindung zugrundeliegende Aufgabe bestand somit darin, ein Mittel zu finden, mit Hilfe dessen die Menge an unvollständig abgebauten Eiweißstoffen und damit die Geruchsintensität der Gülle von vornherein vermindert wird.

Überraschenderweise erreicht man dies mit dem erfindungsgemäßen Diätfuttermittel, das dadurch gekennzeichnet ist, daß es eine Kombination von 10 bis 95, vorzugsweise 10 bis 90 Gew.-% wenigstens eines quellfähigen Tonminerals, 2 bis 12, vorzugsweise 3 bis 12 Gew.-% getrockneter Bierhefe mit einem Feuchtigkeitsgehalt von 4 bis 10 Gew.-%, bezogen auf Bierhefe- Trockensubstanz, 3 bis 14, vorzugsweise 4 bis 14 Gew.-% eines getrockneten und gemahlenen pflanzlichen Trägers für die Bierhefe und 1 bis 12, vorzugsweise 3 bis 12 Gew.-% Algenmehl sowie gegebenenfallsübliche Zusatz- und Hilfsstoffe enthält.

Für die überraschende Wirkung dieses Diätfuttermittels kommt es auf ein Zusammenwirken der genannten Komponenten an. Diese sind alle ungiftig und in Tierfuttermitteln zulässig. Von keinem dieser Bestandteile war es aber bisher bekannt, daß sie einen positiven Einfluß auf die Güllebeschaffenheit ausüben.

Das erfindungsgemäße Diätfuttermittel bewirkt eine Verbesserung der Eiweißverdauung im Dickdarm und damit einen starken Rückgang der Ausscheidung unvollständig abgebauter Eiweißstoffe und der Geruchsintensität der Gülle. Das Fließverhalten in Güllekanälen und -gruben wird verbessert. Die Gülle besitzt eine gute Pflanzenverträglichkeit und verbessert das Wachstum von Futterpflanzen, wobei die sogenannte "Gülleflora" unterdrückt wird. Die Freßlust der Tiere auf solchermaßen gedüngten Weiden wird nicht beeinträchtigt. Das Vieh nimmt das Futter unbegrenzt auf.

Überraschenderweise kommt zu diesen Vorteilen noch hinzu, daß durch das erfindungsgemäße Diätfuttermittel die Futteraufnahme und Futterverwertung verbessert werden. Beides führt zu einem verringerten Futterbedarf und/oder zu einer Verkürzung der Mastdauer und damit einer erhöhten Tierproduktion pro Jahr in einem vorgegebenen Tierhaltungsbetrieb.

Die Passagezeit des Futtermittelbreies im Verdauungskanal wird verlängert. Im Pansen der Wiederkäuer bekommt man eine Säurepufferung und damit einen prozentualen Anstieg des Acetat/Propionatverhältnisses und mit der Verschiebung des pH-Wertes eine positive Beeinflussung der Pansenflora. Die Folge hiervon ist ein Anstieg des Fettgehaltes der Milch bzw. eine Hemmung der Milchfettabnahme bei Verabreichung einer fettsenkenden Futterration. Die Milchproduktion wird erhöht.

Das erfindungsgemäße Diätfuttermittel eignet sich insbesondere zur Gülleverbesserung bei der Tierhaltung von Wiederkäuern, aber auch von Tieren mit einhöhligem Magen, wie Schweinen, sowie von Geflügel.

Das Diätfuttermittel wird der Futterration in einer Menge maximal 3,0 Gew.-%, vorzugsweise in einer Menge von maximal 2,5 Gew.-%, bezogen auf die Tierfutter-Trockenmasse, zugesetzt.

Als quellfähige Tonmineralien kann das erfindungsgemäße Diätfuttermittel beispielsweise Smektite, Montmorillonite, Illite, Nontronite oder Saponite, gegebenenfalls in Kombination mit anderen Tonmineralien, wie Kaoliniten, enthalten. Bevorzugt enthält es als quellfähiges Tonmineral Montmorillonit, der gegebenenfalls aktiviert sein kann, insbesondere einen Bentonit, besonders einen aktivierten Bentonit, wie aktivierten Natriumbentonit.

Die Bierhefe wird dem erfindungsgemäßen Diätfuttermittel auf einem getrockneten und gemahlenen pflanzlichen Träger gebunden zugesetzt. Dieser pflanzliche Träger kann aus Abfall-und Nebenprodukten der Agroindustrie bestehen, wie aus Bata ten-, Kartoffel- oder Getreidepülpen. Er kann auch aus Futter- und Quellmehlen verschiedenen Ursprungs, aus Knollen oder Getreide, bestehen, wie Kartoffelmehl, Manjokmehl, Gerstenmehl, Hafermehl usw. Weiterhin kann er aus Bohnenschalen, hydrolysiertem Federmehl, Maiskolbenschrot oder Preßschnitzeln verschiedenen Ursprungs, z. B. Zuckerrüben, Bruchreis, Ölkuchenextraktionsschroten usw., aus Guarkernmehl, Roßkastanienschrot oder Johannisbrotmehl bestehen. Vorzugsweise besteht der pflanzliche Träger aus Biertreber.

Zweckmäßig wird die trägergebundene Bierhefe dem Diätfuttermittel in solcher Menge zugesetzt, daß das Diätfuttermittel 3 bis 8, vorzugsweise 3,5 bis 6 Gew.-% getrocknete Bierhefe mit dem angegebenen Restfeuchtigkeitsgehalt enthält. Der pflanzliche Träger ist in dem Diätfuttermittel zweckmäßig in einer Menge von 4 bis 10, vorzugsweise von 5 bis 8 Gew.-% enthalten.

Als pflanzlicher Träger für die Bierhefe kommt auch aufgeschlossene Stärke, wie aufgeschlossene Weizenstärke, in Betracht.

Das als weiterer Bestandteil des erfindungsgemäßen Diätfuttermittels enthaltene Algenmehl ist beispielsweise Seegrasmehl, Tangmehl oder Seealgenmehl. Es ist in dem Diätfuttermittel zweckmäßig in einer Menge von 3 bis 8, vorzugsweise von 4 bis 6 Gew.-% enthalten. Besonders bevorzugt sind Algenmehle, die durch schonende indirekte Trocknung mittels geothermischer Wärmeenergie erhalten wurden. Besonders zweckmäßig ist ein aus mit geothermischem Grundwasser gewaschenen Algen erhaltenes Algenmehl.

Wie eingangs erwähnt, können die erfindungsgemäßen Diätfuttermittel zusätzlich zu den erfindungswesentlichen Komponenten übliche Zusatz- und Hilfsstoffe enthalten. Diese sind beispielsweise folgende:

Vitamine, wie Vitamin A, B und E; und Provitamine, wie beta-Carotin und/oder Cholinchlorid.

übliche anorganische Verbindungen von Calcium, Phosphor, Natrium, Magnesium usw., wie Calciumacetat, Calciumgluconat, Calciumlactat, Calciumcarbonat, Calcium-Magnesiumphosphat oder Calcium-Natriumphosphat, Rohphosphat, Natrium-Calcium-Magnesiumphosphat, Knochenasche, Natriumchlorit, Natriumbicarbonat, Magnesiumcarbonat usw.;

Aminosäuren, Propylenglycol, Antioxidantien, Aromastoffe, Emulgatoren, natürliche Antidiarrhoica, Probiotika und Hefen.

Je nach der Tierart, bei der die Gülleverbesserung erfolgen soll, kann es zweckmäßig sein, in dem Diätfuttermittel nach der Erfindung die Menge des Tonminerals unterschiedlich einzustellen. So ist es bevorzugt, für die Güllverbesserung bei Wiederkäuern und Geflügel die Menge des Tonminerals auf 40 bis 90, vorzugsweise 60 bis 90 Gew.-% einzustellen. Für die Güllverbesserung bei Tieren mit einhöhligem Magen, wie Schweinen, ist es dagegen zweckmäßig, die Menge des Tonminerals auf nur 30 bis 85, vorzugsweise 40 bis 60 Gew.-% einzustellen. Letztere Diätfuttermittel enthalten außerdem günstigerweise zusätzlich 20 bis 50 Gew.-%, vorzugsweise 25 bis 40 Gew.-% eines faserstoffreichen Ballaststoffes, vorzugsweise Biertreber, und 0,3 bis 5, vorzugsweise 0,5 bis 3, besonders 0,5 bis 2 Gew.-% Propionsäure. Außerdem enthalten Diätfuttermittel für Tiere mit einhöhligem Magen zweckmäßig zusätzlich 2 bis 10, vorzugsweise 3 bis 6 Gew.-% eines antilaxierenden Mittels pflanzlichen Ursprungs, wie Johannisbrotmehl, Guarmehl, Roßkastanienschrot oder Topinambur.

Eine zweckmäßige Zusammensetzung eines Diätfuttermittels für Wiederkäuern und Geflügel besteht aus 85 Gew.-% Bentonit, 10 Gew.-% trägerfixierter Bierhefe und 5 Gew.-% Algenmehl. Ein Beispiel für ein Diätfuttermittel für Schweine besteht aus 45 Gew.-% Bentonit, 33 Gew.-% getrocknetem Biertreber als faserstoffreicher Ballaststoff, 13 Gew.-% trägergebundener Bierhefe, 4 Gew.-% Algenmehl, 4 Gew.-% Johannisbrotmehl und 1 Gew.-% Propionsäure.

Die folgenden Beispiele dienen der weiteren Erläuterung der Effekte der erfindungsgemäßen Diätfuttermittel.

Beispiel 1

Schweine wurden Fütterungsversuchen unterzogen, bei denen der Futterration 3 % eines Diätfuttermittels aus 45 Gew.-% Bentonit, 33 Gew.-% Biertreber, 13 Gew.-% trägergebundener Bierhefe, 4 Gew.-% Algenmehl, 4 Gew.-% Johannisbrotmehl und 1 % Propionsäure zugesetzt worden war.

Während des Versuchsverlaufs wurden Gülleproben entnommen und mit Gülleproben verglichen, die von Kontrolltieren stammten, die die gleiche Futterration, aber ohne erfindungsgemäßes Diätfuttermittel erhielten.

Die olfaktometrische Messung ergab folgende Durchschnittswerte in Geruchseinheiten pro Kubikmeter (GE/m³):

| Gülle der Kontrolltiere: | 11.800 GE/m³ |
|---|---|
| Gülle der erfindungsgemäß gefütterten Tiere: | 7.200 GE/m³ |

Diese Fütterungsversuche zeigten somit eine um etwa 40 % verringerte Geruchsbelastung aufgrund der Zufütterung des erfindungsgemäßen Diätfuttermittels.

Bei einem anderen Versuch wurden dem Schweinefutter 2,5 % des obigen Diätfuttermittels zugesetzt. Dabei wurde der Güllegeruch von 300 auf etwa 100 GE/m³ herabgesetzt.

Beispiel 2

An einem Forschungsinstitut wurden weitere Fütterungsversuche mit Schweinen durchgeführt. Zwei Tiergruppen wurde das gleiche Futter gegeben, wobei dem Futter der einen Tiergruppe 3 % des im Bespiel 1 genannten Diätfuttermittels zugesetzt wurde. Durch geeignete Meßvorrichtungen wurde der Verdauungsvorgang der Tiere permanent überwacht.

Die Ergebnisse zeigten, daß der pH-Wert des Blinddarminhalts im Vergleich zu den Kontrolltieren um 0,2 bis 0,3 Einheiten niedriger lag. Das Essigsäure/Propionsäureverhältnis lag bei den erfindungsgemäß gefütterten Tieren im Durchschnitt bei 3,15 : 1, bei den Kontrolltieren bei nur 2,97 : 1.

Durch die pH-Wertverschiebung verdauen die Tiere gesünder in einem leicht sauren pH-Bereich. Es werden weniger leicht flüchtige toxisch wirkende stickstoffhaltige Abbauprodukte freigesetzt. Die Leber und andere Organe werden dadurch weniger belastet. Es kommt zu einer gesünderen Tierentwicklung und verbesserten Futterverwertung.

Beispiel 3

In vier Schweinemästereien wurden Fütterungsversuche durchgeführt, wobei jeweils eine Kontrollgruppe (KG) und eine Versuchsgruppe (VG) mit der gleichen Futterration versorgt wurden, wobei dem Futter der Versuchsgruppe 2,5 Gew.-% des im Bespiel 1 verwendeten Diätfuttermittels zugesetzt wurden. Die Ergebnisse der Fütterungsversuche finden sich in der nachfolgenden Tabelle I.

Tabelle I

| Versuchsstall Nr. | 1 | | 2 | | 3 | | 4 | |
|---|---|---|---|---|---|---|---|---|
| Zulage | VG[1] | KG | VG | KG[1] | VG | KG | VG | KG |
| | 2,5 % | - | 2,5 % | - | 2,5 % | - | 2,5 % | - |
| Anzahl der Tiere | 200 | 200 | 145 | 144 | 54 | 54 | 48 | 48 |
| Ø Anfangsgewicht kg | 25 | 25 | 25,7 | 25 | 25 | 25 | 25 | 25 |
| Fleischzuwachs kg | 75 | 75 | 71,7 | 74 | 90,4 | 87 | 80,22 | 77,7 |
| Tägl. Zunahme Ø g | 690 | 650 | 704 | 702 | 731 | 702 | 653 | 632 |
| Futterverwertung | 2,9:1 | 3,2:1 | 2,69:1 | 2,92:1 | 2,72:1 | 2,95:1 | 3,12:1 | 3,35:1 |
| Masttage | 109 | 115 | 102 | 106 | 123,3 | 123,9 | 122,8 | 122,8 |
| Umtriebe/Jahr | 3,35 | 3,16 | 3,55 | 3,4 | 2,96 | 2,96 | 2,97 | 2,97 |

1 VG = Versuchsgruppe ; 2 KG = Kontrollgruppe

Aus den Versuchen ist ersichtlich, daß die durchschnittliche Tageszunahme der Mastschweine bei Zusatz der erfindungsgemäßen Diätfuttermittel höher lag, daß die Futterverwertung

1 VG = Versuchsgruppe; 2 KG = Kontrollgruppe

4

besser war, daß teilweise die Mastzeit verkürzt war und daher mehr Masttiere pro Jahr produziert werden konnten.

Beispiel 4

Die Gülleverbesserung wurde anhand des Gesamtstickstoffgehaltes der Gülle bei der Aufzucht von Schweinen und Wiederkäuern geprüft. Kontrollgruppen und Versuchsgruppen beider Tierarten erhielten jeweils die gleiche Futterration, wobei für die Schweine dem Futter 2,5 % des in Beispiel 1 genannten Diätfuttermittels zugesetzt wurden und für die Wiederkäuer ein entsprechender Zusatz von 50 g je Tier und Tag zugegeben wurde. Die Ergebnisse dieser Versuche finden sich in der nachfolgenden Tabelle II.

## Tabelle II

| Versuchsstall Nr. | Gesamt-N $kg/m^3$ | mineralischer N ($NH_4$-Stickstoff) $kg/m^3$ | % Anteil am Gesamt-N (Mineralisierung) | Bemerkung |
|---|---|---|---|---|
| 1a) ohne Zusatz | 5,46 | 4,02 | 72 | Schweine |
| b) mit 2,5 % Zusatz | 5,88 | 4,94 | 84 | |
| 2a) ohne Zusatz | 7,3 | 4,97 | 68 | |
| b) mit 2,5 % Zusatz | 10,01 | 8,9 | 89 | |
| 3a) ohne Zusatz | 6,5 | 4,3 | 66 | |
| b) mit 2,5 % Zusatz | 10,4 | 9,7 | 93 | |
| 4a) ohne Zusatz | 2,45 | 1,25 | 51 | Wiederkäuer |
| b) Zusatz 50 g Tier/Tag | 4,10 | 2,85 | 69,5 | |
| 5a) ohne Zusatz | 2,50 | 1,40 | 56 | |
| b) Zusatz 50 g Tier/Tag | 3,95 | 2,8 | 71 | |
| 6a) ohne Zusatz | 3,10 | 1,75 | 57 | |
| b) Zusatz 50 g Tier/Tag | 4,38 | 2,85 | 65 | |

Aus den Ergebnissen ist ersichtlich, daß bei Zusatz des erfindungsgemäßen Diätfuttermittels zu der Futterration bei Schweinen und Wiederkäuern der Anteil an mineralischem Stickstoff am Gesamtstickstoffgehalt der Gülle erhöht war, was eine verbesserte Eiweißverdauung anzeigt.

**Ansprüche**

1. Diätfuttermittel, dadurch gekennzeichnet, daß es eine Kombination von 10 bis 95, vorzugsweise 10 bis 90 Gew.-% wenigstens eines quellfähigen Tonminerals, 2 bis 12, vorzugsweise 3 bis 12 Gew.-% getrockneter Bierhefe mit einem Feuchtigkeitsgehalt von 4 bis 10 Gew.-%, bezogen auf Bierhefe-Trockensubstanz, 3 bis 14, vorzugsweise 4 bis 14 Gew.-% eines getrockneten und gemahlenen pflanzlichen Trägers für die Bierhefe und 1 bis 12, vorzugsweise 3 bis 13 Gew.-% Algenmehl sowie gegebenenfalls übliche Zusatz- und Hilfsstoffe enthält.

2. Diätfuttermittel nach Anspruch 1, dadurch gekennzeichnet, daß es 40 bis 90, vorzugsweise 60 bis 90 Gew.-% des Tonminerals enthält.

3. Diätfuttermittel nach Anspruch 1, dadurch gekennzeichnet, daß es zusätzlich 20 bis 50 Gew.-% wenigstens eines faserstoffreichen Ballaststoffes und 0,3 bis 5 Gew.-% Propionsäure enthält.

4. Diätfuttermittel nach Anspruch 3, dadurch gekennzeichnet, daß es 25 bis 40 Gew.-% des faserstoffreichen Ballaststoffes und 0,5 bis 3, vorzugsweise 0,5 bis 2 Gew.-% Propionsäure enthält.

5. Diätfuttermittel nach Anspruch 3 oder 4, dadurch gekennzeichnet, daß es 30 bis 85, vorzugsweise 40 bis 60 Gew.-% des Tonminerals enthält.

6. Diätfuttermittel nach einem der Ansprüche 3 bis 5, dadurch gekennzeichnet, daß es 2 bis 10, vorzugsweise 3 bis 6 Gew.-% eines antilaxierenden Mittels pflanzlichen Ursprungs enthält.

7. Diätfuttermittel nach einem der Ansprüche 1 bis 6, dadurch gekennzeichnet, daß es 3 bis 8, vorzugsweise 3,5 bis 6 Gew.-% der getrockneten Bierhefe enthält.

8. Diätfuttermittel nach einem der Ansprüche 1 bis 7, dadurch gekennzeichnet, daß es 4 bis 10, vorzugsweise 5 bis 8 Gew.-% des pflanzlichen Trägers enthält.

9. Diätfuttermittel nach einem der Ansprüche 1 bis 8, dadurch gekennzeichnet, daß es 3 bis 8, vorzugsweise 4 bis 6 Gew.-% Algenmehl enthält.

10. Diätfuttermittel nach einem der Ansprüche 1 bis 9, dadurch gekennzeichnet, daß es als quellfähiges Tonmineral einen Montmorillonit, vorzugsweise einen Bentonit, besonders einen aktivierten Bentonit enthält.

11. Diätfuttermittel nach einem der Ansprüche 1 bis 10, dadurch gekennzeichnet, daß es als pflanzlichen Träger und/oder als faserstoffreichen Ballaststoff Biertreber enthält.

12. Diätfuttermittel nach einem der Ansprüche 1 bis 11, dadurch gekennzeichnet, daß es als Algenmehl ein durch schonende indirekte Trocknung mittels geothermischer Wärmeenergie erhaltenes Algenmehl enthält.

13. Diätfuttermittel nach einem der Ansprüche 1 bis 12, dadurch gekennzeichnet, daß es als Algenmehl ein aus mit geothermischem Grundwasser gewaschenen Algen erhaltenes Algenmehl enthält.

14. Verwendung eines Diätfuttermittels nach einem der Ansprüche 1 bis 13, zur Gülleverbesserung bei Tieren.

15. Verwendung eines Diätfuttermittels nach Anspruch 14 in einer Menge von maximal 3,0 Gew.-%, bezogen auf die Tierfutter-Trockenmasse.

16. Verwendung eines Diätfuttermittels nach einem der Ansprüche 2 und 7 bis 13 zur Gülleverbesserung bei Wiederkäuern.

17. Verwendung eines Diätfuttermittels nach einem der Ansprüche 3 bis 13 zur Gülleverbesserung bei Tieren mit einhöhligem Magen, z.B. Schweinen.